# EUROPEAN PATENT SPECIFICATION

(11) **EP 1 301 700 B1**
(45) Date of publication and mention of the grant of the patent: **30.05.2007**
(21) Application number: 01962834.6
(22) Date of filing: 05.07.2001
(51) Int. Cl.: F02M 37/22

(54) **DIESEL FUEL FILTER WITH INTERCHANGEABLE CARTRIDGE**
DIESELKRAFTSTOFFFILTER MIT AUSTAUSCHBAREM FILTEREINSATZ
FILTRE A CARBURANT DIESEL AVEC CARTOUCHE INTERCHANGEABLE

(30) Priority: 17.07.2000 IT MI001615
(43) Date of publication of application: 16.04.2003
(73) Proprietor: Sogefi Filtration S.p.a., 46100 Mantova (IT)
(72) Inventor: BARACCHI, Paolo, I-10155 Torino (IT); BECCARI, Bruno, I-46100 Mantova (IT); CROVETTI, Claudio, I-46100 Mantova (IT); TALLANO, Sergio, I-46047 Porto Mantovano (IT)
(74) Representative: Modiano, Micaela Nadia
(86) International application number: PCT/EP2001/007718
(87) International publication number: WO 2002/006662

(56) References cited:
- WO-A-98/13121
- GB-A- 2 150 456
- US-A- 5 098 560
- US-A- 5 770 065
- PATENT ABSTRACTS OF JAPAN vol. 1999, no. 13, 30 November 1999 (1999-11-30) & JP 11 216309 A (TOYO ELEMENT KOGYO KK), 10 August 1999 (1999-08-10)

## Description

### Technical field

The present invention relates to a Diesel fuel filter with interchangeable cartridge.

### Background art

It is known that the filters inserted in the circuit that supplies the fuel of Diesel engines, commonly known as Diesel fuel, comprise, inside a container, a filtering mass, known as cartridge, which is designed to be crossed by the fuel which flows inside the filter between an intake connector and a discharge connector.

Several kinds of filters are available, and in one of them the container is provided with a lid which is fixed detachably so as to allow easy access to the inside of the filter; in this manner, when a cartridge has exhausted its operating capability, it is replaced easily, leaving in place the rest of the filter, with clear advantages in terms of operation, cost and environmental protection. See, for example, the filters disclosed in WO 98/13121 and GB-2 150 456 A.

### Disclosure of the Invention

These filters however are not entirely satisfactory; accordingly, the aim of the present invention is to provide a filter with interchangeable cartridge having improved characteristics.

This aim is achieved by a Diesel fuel filter with interchangeable cartridge according to the invention, which has the features set forth in claim 1.

### Brief description of the Drawings

Further characteristics and advantages of the present invention will become better apparent from the description of two preferred but not exclusive embodiments thereof, illustrated only by way of non-limitative example in the accompanying drawings, wherein:
Figure 1 is a sectional view of a first embodiment of the filter according to the invention;
Figure 2 is a sectional view of a second embodiment of the invention.

### Ways of carrying out the Invention

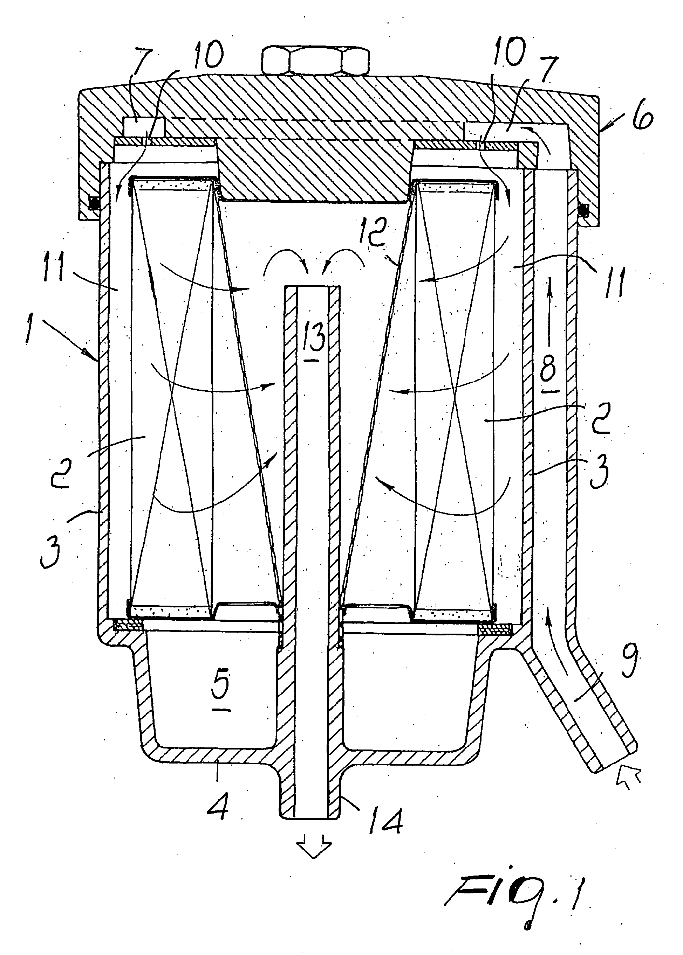

With reference to Figure 1, the reference numeral 1 generally designates a filter which comprises a filtering mass or cartridge 2 which is contained within a container, which has a side wall 3 and a bottom 4 with a corresponding water collection chamber 5, as described in greater detail hereinafter; a lid, designated by the reference numeral 6, is detachably associated with said container.

One of the main features of the invention is the presence of a duct 7 formed in the lid 6, which is connected by means of a duct 8 located in a peripheral region of the container to a fuel intake connector 9 and is provided with passages such as 10 which open onto a portion of space 11 lying between the filtering mass 2 and the side wall 3 of the container.

This produces a circulation of the fuel inside the filter which is illustrated by the arrows in the figure; the fuel arrives in the duct 7, by means of the duct 8, exits from there through the passages such as 10, crosses the filtering mass 2 from the outside inward, encounters a micromesh 12 which retains water droplets that are present in the fuel, sending them by gravity to the collection chamber 5, and enters a duct 13, which extends inside the filter a fuel discharge connector 14 of the filter.

Attention is drawn to the synergistic relationship that arises between the inverted truncated cone of the micromesh 12 and the extension of the duct 13 so as to reach the wider region of the micromesh 12, with particularly facilitated insertion of the fuel in said duct.

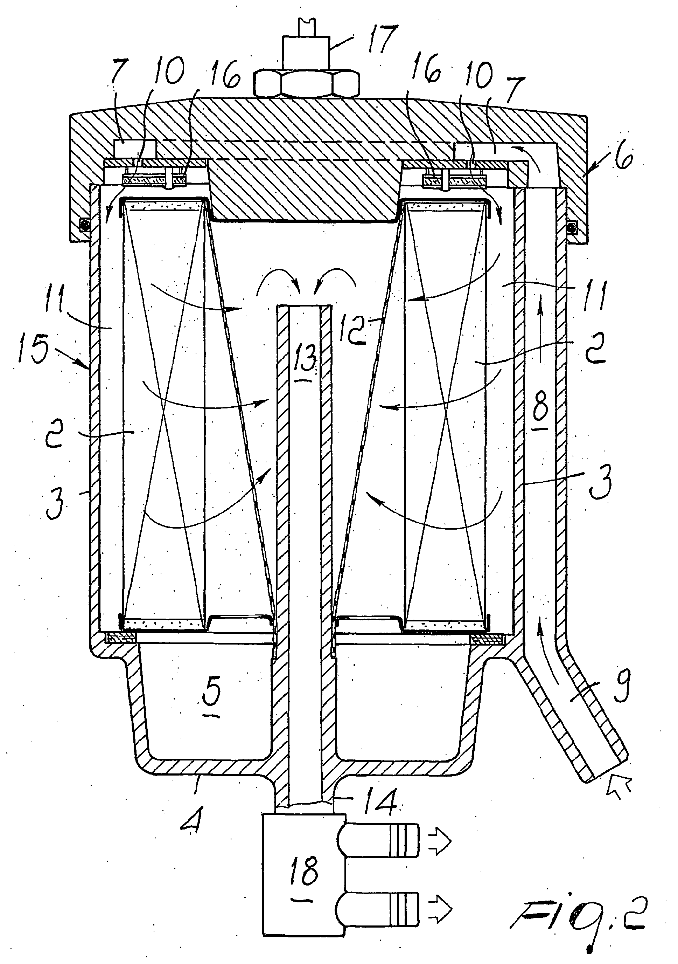

The second embodiment of the invention generally designated by the reference numeral 15, which is shown in Figure 2, has two additional elements with respect to the first embodiment of Figure 1, which is otherwise unchanged.

The first element is constituted by a heating element 16 with an electric resistor which is supplied by means of a connector 17, which is annular and is supported by the structure of the lid 6 and is located at the passages such as 10 so that it is struck by the fuel that exits from said passages.

The second element is constituted by a so-called overflow valve 18.

Such valve is per se known and is meant to separate the fuel that exits from the filter into two streams which are directed respectively so as to feed the engine and to a recirculation system in the tank; in the prior art, such valve is located in the ducts that connect the filter to the engine, whereas in the present invention it is associated directly with the filter in various manners.

Such valve can in fact be associated monolithically with the fuel discharge connector, as in the case of Figure 2, but could be detachably associated with the connector, for example by threading, or could be formed within the bottom 4 of the container.

The disclosed invention is susceptible of numerous modifications and variations, all of which are within the scope of the appended claims; thus, for example, the duct 7 may be provided in any manner in the lid 6 with the corresponding passages such as 10, and only the heater, or only the overflow valve, might be provided to integrate the embodiment of Figure 1.

Conveniently the filter is further provided with manually- or automatically-operated means for evacuating the water that has accumulated in the collection chamber 5.

This application claims priority from the Italian Patent Application No. MI2000A001615. Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A Diesel fuel filter (1) with interchangeable cartridge, comprising a filtering mass or cartridge (2) which is contained within a container which has a side wall (3) and a bottom (4) and is provided with a lid (6) which is fixed detachably to the side wall (3), a portion of space (11) provided between the filtering mass (2) and the side wall (3) of the container, a fuel intake connector (9), and a fuel discharge connector (14) that is provided at the bottom (4) of the container and is open in a central region of the portion of space delimited inside the filtering mass (2), **characterized in that** it comprises a duct (8) which is located in a peripheral region of the container and is suitable to connect said fuel intake connector (9) to a duct (7) which is formed within the lid (6), said duct (7) being provided with passages (10) which open onto said portion of space (11) between the filtering mass (2) and the side wall (3) of the container, so as to allow the fuel to access said filtering mass, through which it flows from the outside inward.

2. The filter according to claim 1, **characterized in that** the duct (7) formed within the lid (6) is provided with said passages (10) which are uniformly distributed along its entire extension and open onto the portion of space lying between the filtering mass (2) and the side wall (3) of the container.

3. The filter according to claim 2, **characterized by** the presence of a heating element (16) of the electric resistor type, which is supported by the structure of the lid (6) and is located at the passages (10) of the duct (7) formed in said lid (6), so as to be struck by the fuel that exits from said passages.

4. The filter according to claim 1, **characterized by** the presence of an overflow valve (18) at the fuel discharge connector (14).

5. The filter according to claim 4, **characterized in that** said overflow valve (18) is formed within the bottom (4) of the container.

6. The filter according to claim 5, **characterized in that** the overflow valve (18) is monolithically associated with the bottom (4) of the container.

7. The filter according to claim 5, **characterized in that** the overflow valve (18) is detachably associated with the bottom (4) of the container.

8. The filter according to claim 1., **characterized by** the presence of a micromesh (12) which is suitable to capture water droplets that are present in the stream of fuel that exits from the filtering mass (2) in order to send them to a collection chamber (5) provided at the bottom (4) of the container, said collection (5) chamber being shaped like a truncated cone which is open toward the lid of the filter, the fuel discharge connector (14) extending inside said filter into a duct which runs along the longitudinal axis of the container and arrives proximate to the lid (6).

## Patentansprüche

1. Ein Dieselkraftstofffilter (1) mit austauschbarem Filtereinsatz bestehend aus einer Filtermasse oder einem Filtereinsatz (2), welche/welcher in einem Behälter aufgenommen ist, der eine Seitenwand (3) und eine Unterseite (4) aufweist und mit einem Deckel (6) versehen ist, der lösbar an der Seitenwand (3) befestigt ist, einem zwischen der Filtermasse (2) und der Seitenwand (3) des Behälters vorgesehenen räumlichen Abschnitt (11), einem Kraftstoffeinlassverbindungsstück (9) und einem an der Unterseite (4) des Behälters befestigten Kraftstoffauslassverbindungsstück (14) und in einem zentralen Bereich des innerhalb der Filtermasse (2) begrenzten räumlichen Abschnitts offen ist, **dadurch gekennzeichnet, dass** er eine im äußeren Bereich des Behälters angeordnete Leitung (8) aufweist geeignet zur Verbindung eines Kraftstoffeinlassverbindungsstücks (9) mit einer im Deckel (6) ausgebildeten Leitung (7), wobei diese Leitung (7) mit sich in diesen räumlichen Bereich (11) zwischen Filtermasse (2) und Seitenwand (3) des Behälters öffnenden Durchlässen (10) versehen ist, um so dem Kraftstoff den Zugang zu der genannten Filtermasse zu ermöglichen, die er von außen nach innen durchfließt.

2. Filter nach Anspruch 1, **dadurch gekennzeichnet, dass** die im Deckel (6) ausgebildete Leitung (7) mit den genannten Durchlässen (10) versehen ist, die gleichmäßig entlang ihrer gesamten Länge verteilt sind, und sich in den zwischen der Filtermasse (2) und der Seitenwand (3) des Behälters liegenden räumlichen Bereich öffnen.

3. Filter nach Anspruch 2, **gekennzeichnet durch** das Vorsehen eines Heizelementes (16) vom Typ eines elektrischen Widerstands, welches von der Deckelstruktur getragen ist und an den Durchlässen (10) der in dem genannten Deckel (6) ausgebildeten Leitung (7) angeordnet ist, um so von dem aus den genannten Durchlässen austretenden Kraftstoff getroffen zu werden.

4. Filter nach Anspruch 1, **gekennzeichnet durch** das Vorsehen eines Überlaufventils (18) am Kraftstoffauslassverbindungsstück (14).

5. Filter nach Anspruch 4, **dadurch gekennzeichnet, dass** das genannte Überlaufventil (18) im Boden (4) des Behälters ausgebildet ist.

6. Filter nach Anspruch 5, **dadurch gekennzeichnet, dass** das Überlaufventil (18) mit der Unterseite (4) des Behälters monolithisch verbunden ist.

7. Filter nach Anspruch 5, **dadurch gekennzeichnet, dass** das Überlaufventil (18) lösbar mit der Unterseite (4) des Behälters verbunden ist.

8. Filter nach Anspruch 1, **gekennzeichnet durch** das Vorsehen eines feinmaschigen Siebes (12) geeignet zum Auffangen von im Kraftstoffstrom vorhandenen Wassertröpfchen, die aus der Filtermasse (2) austretenden, um diese in eine an der Unterseite (4) des Behälters ausgebildete Sammelkammer (5) zu schicken, wobei die genannte Sammelkammer (5) die Form eines gestutzten Kegels besitzt, der zum Filterdeckel hin offen ist, und sich das Kraftstoffauslassverbindungsstück (14) in dem genannten Filter in einer Leitung entlang der Längsachse des Behälters bis in die Nähe des Deckels (6) erstreckt.

## Revendications

1. Filtre à carburant diesel (1) à cartouche interchangeable, comprenant une masse ou cartouche filtrante (2) qui est contenue à l'intérieur d'un récipient qui présente une paroi latérale (3) et un fond (4) et est muni d'un couvercle (6) qui est fixé de façon amovible à la paroi latérale (3), une partie d'espace (11) prévu entre la masse filtrante (2) et la paroi latérale (3) du récipient, un raccord d'admission de carburant (9), et un raccord d'évacuation de carburant (14) qui est prévu au niveau du fond (4) du récipient et débouche dans une région centrale de la partie d'espace délimité à l'intérieur de la masse filtrante (2),
**caractérisé en ce qu'**il comprend un conduit (8) qui est situé dans une région périphérique du récipient et est destiné à relier ledit raccord d'admission de carburant (9) à un conduit (7) qui est réalisé à l'intérieur du couvercle (6), ledit conduit (7) étant muni de passages (10) qui débouchent sur ladite partie d'espace (11) entre la masse filtrante (2) et la paroi latérale (3) du récipient, de façon à permettre l'accès du carburant vers ladite masse filtrante, à travers laquelle il s'écoule de l'extérieur vers l'intérieur.

2. Filtre selon la revendication 1,
**caractérisé en ce que** le conduit (7) réalisé dans le couvercle (6) est muni desdits passages (10) qui sont uniformément répartis sur la totalité de son extension et débouchent sur la partie d'espace se trouvant entre la masse filtrante (2) et la paroi latérale (3) du récipient.

3. Filtre selon la revendication 2,
**caractérisé par** la présence d'un élément chauffant (16) du type à résistance électrique, qui est supporté par la structure du couvercle (6) et est situé au niveau des passages (10) du conduit (7) réalisés dans ledit couvercle (6), de façon à être atteint par le carburant qui sort desdits passages.

4. Filtre selon la revendication 1,
**caractérisé par** la présence d'une valve de trop-plein (18) au niveau du raccord d'évacuation de carburant (14).

5. Filtre selon la revendication 4,
**caractérisé en ce que** ladite valve de trop-plein (18) est réalisée dans le fond (4) du récipient.

6. Filtre selon la revendication 5,
**caractérisé en ce que** la valve de trop-plein (18) est associée de façon monolithique au fond (4) du récipient.

7. Filtre selon la revendication 5,
**caractérisé en ce que** la valve de trop-plein (18) est associée de façon amovible au fond (4) du récipient.

8. Filtre selon la revendication 1,
**caractérisé par** la présence d'un micromaillage (12) qui est destiné à piéger des gouttelettes d'eau qui sont présentes dans le jet de carburant qui sort de la masse filtrante (2) de façon à les envoyer vers une chambre de collecte (5) prévue au niveau du fond (4) du récipient, ladite chambre de collecte (5) ayant une forme analogue à un cône tronqué qui s'ouvre vers le couvercle du filtre, le raccord d'évacuation de carburant (14) s'étendant à l'intérieur dudit filtre dans un conduit qui court le long de l'axe longitudinal du récipient et arrive à proximité du couvercle (6).
